(19) Europäisches Patentamt
European Patent Office
Office européen des brevets

(11) **EP 4 660 210 A1**

(12) **EUROPEAN PATENT APPLICATION**
published in accordance with Art. 153(4) EPC

(43) Date of publication:
**10.12.2025 Bulletin 2025/50**

(21) Application number: **24750093.7**

(22) Date of filing: **24.01.2024**

(51) International Patent Classification (IPC):
**C08F 236/18** (2006.01)    **C08J 5/02** (2006.01)

(52) Cooperative Patent Classification (CPC):
**C08F 236/18; C08J 5/02**

(86) International application number:
**PCT/JP2024/002092**

(87) International publication number:
**WO 2024/162143 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023012469**

(71) Applicant: **Denka Company Limited
Tokyo 103-8338 (JP)**

(72) Inventors:
• **KUMAGAI, Yushi
Tokyo 103-8338 (JP)**
• **UENO, Yumemi
Tokyo 103-8338 (JP)**

(74) Representative: **Hoffmann Eitle
Patent- und Rechtsanwälte PartmbB
Arabellastraße 30
81925 München (DE)**

(54) **CHLOROPRENE-BASED POLYMER , CHLOROPRENE-BASED POLYMER LATEX, AND DIP-MOLDED ARTICLE**

(57)    To provide a chloroprene-based polymer capable of yielding a dip-molded article that has sufficient tensile strength at break and flexibility, and that can maintain flexibility even after long-term storage.

According to the present invention, there is provided a chloroprene-based polymer comprising a chloroprene monomer unit and a 2,3-dichloro-1,3-butadiene monomer unit, wherein the chloroprene-based polymer contains 12 to 30% by mass of the 2,3-dichloro-1,3-butadiene monomer unit with respect to 100% by mass of a total of the chloroprene monomer unit and the 2,3-dichloro-1,3-butadiene monomer unit, the chloroprene-based polymer has a toluene-insoluble content of 60 to 87% by mass, a low-temperature hardness change $\Delta H1$ of a test dip-molded article is 29 or less, wherein the test dip-molded article is obtained by molding a test chloroprene-based polymer latex composition comprising the chloroprene-based polymer by a dip coagulation method and heat-drying a molded body resulting therefrom at 130°C for 30 minutes; the low-temperature hardness change $\Delta H1$ is represented by HB1-HA1; HA1 represents a Shore hardness measured at 23°C using the durometer type A after heat-treating the test dip-molded article at 70°C for 30 minutes and then stacking the test dip-molded article to a thickness of $6.00 \pm 0.20$ mm, and HB1 represents a Shore hardness measured at -10°C using the durometer type A after heat-treating the test dip-molded article at 70°C for 30 minutes, further storing the test dip-molded article at -10°C for 168 hours, and then stacking the test dip-molded article to a thickness of $6.00 \pm 0.20$ mm, and a ratio RB/RA is 0.10 or more and 0.70 or less, wherein the ratio RB/RA is a ratio of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, obtained from a gas chromatography analysis of an extract extracted from the test dip-molded article with an ethanol and toluene azeotropic mixture specified in JIS K 6229.

EP 4 660 210 A1

**Description**

TECHNICAL FIELD

The present invention relates to a chloroprene-based polymer, a chloroprene-based polymer latex, and a dip-molded article.

BACKGROUND ART

A chloroprene-based polymer is known as a material for dip-molded products made from dip-molded articles such as medical surgical gloves, medical examination gloves, industrial gloves, balloons, catheters, and rubber boots.

Various technologies have been proposed relating to chloroprene-based polymer latexes for dip-molded products and dip-molded articles of chloroprene-based polymers. Patent Literature 1 describes a polychloroprene latex for dip-molded product applications, having a pH of 7 to 14, containing 100 parts by mass of a modified polychloroprene obtained by copolymerizing chloroprene and methacrylic acid, 90 to 150 parts by mass of water, 1 to 5 parts by mass of an emulsifier, and 0.5 to 2.5 parts by mass of potassium ions. Patent Literature 2 describes, for dip-molded product applications, a mercaptan-modified polychloroprene latex obtained by copolymerizing chloroprene and 2,3-dichloro-1,3-butadiene, wherein in a 13C-solid-state NMR spectrum of the polychloroprene, a peak area (A) from 126.2 to 127.6 ppm, a peak area (B) from 122.0 to 126.2 ppm, and a peak area (C) from 129.9 to 130.3 ppm are within a range represented by the following general formula (I). Patent Literature 3 describes a chloroprene polymer latex for dip-molded product applications, which can achieve both excellent flexibility and mechanical properties in a vulcanized rubber produced by dip-molding, by including a high molecular weight component and a low molecular weight component. Patent Literature 4 describes a chloroprene-based polymer latex that exhibits excellent flexibility and mechanical properties even under mild vulcanization conditions by copolymerizing a chloroprene monomer and an isoprene monomer, which is a raw material for isoprene rubber. Patent Literature 5 describes a dip-molded article of an isoprene and chloroprene-based polymer that exhibits excellent flexibility even without containing a diphenylguanidine-based reagent, which is a vulcanization accelerator, by mixing an isoprene-based polymer latex and a chloroprene-based polymer latex. Patent Literature 6 describes a dip-molded article that exhibits excellent mechanical properties by mixing a nitrile-butadiene-based polymer (NBR) latex or an isoprene-based polymer latex with a chloroprene-based polymer latex as a base.

$$\frac{4.0}{100} \leqq \frac{A}{B-C} \leqq \frac{5.8}{100} \quad \cdots \quad (\text{I})$$

CITATION LIST

PATENT LITERATURE

Patent Literature 1:    JP-A-2014-114342
Patent Literature 2:    WO2019/009038
Patent Literature 3:    JP 2019-143002 A
Patent Literature 4:    WO 2021/132460
Patent Literature 5:    JP 2017-508840 T
Patent Literature 6:    JP 2020-189963 A

SUMMARY OF INVENTION

TECHNICAL PROBLEM

However, with a conventional chloroprene-based polymer, it has not been possible to obtain a dip-molded article that has sufficient tensile strength at break and flexibility, and that can maintain flexibility even after long-term storage.

The present invention has been made in view of such circumstances, and an object thereof is to provide a chloroprene-based polymer capable of yielding a dip-molded article that has sufficient tensile strength at break and flexibility, and that can maintain flexibility even after long-term storage.

SOLUTION TO PROBLEM

According to the present invention, there is provided a chloroprene-based polymer comprising a chloroprene monomer unit and a 2,3-dichloro-1,3-butadiene monomer unit, wherein:

the chloroprene-based polymer contains 12 to 30% by mass of the 2,3-dichloro-1,3-butadiene monomer unit with respect to 100% by mass of a total of the chloroprene monomer unit and the 2,3-dichloro-1,3-butadiene monomer unit, the chloroprene-based polymer has a toluene-insoluble content of 60 to 87% by mass, a low-temperature hardness change $\Delta H1$ of a test dip-molded article is 29 or less, wherein the test dip-molded article is obtained by molding a test chloroprene-based polymer latex composition comprising the chloroprene-based polymer by a dip coagulation method and heat-drying a molded body resulting therefrom at 130°C for 30 minutes; the low-temperature hardness change $\Delta H1$ is represented by HB1-HA1; HA1 represents a Shore hardness measured at 23°C using the durometer type A after heat-treating the test dip-molded article at 70°C for 30 minutes and then stacking the test dip-molded article to a thickness of $6.00 \pm 0.20$ mm, and HB1 represents a Shore hardness measured at -10°C using the durometer type A after heat-treating the test dip-molded article at 70°C for 30 minutes, further storing the test dip-molded article at -10°C for 168 hours, and then stacking the test dip-molded article to a thickness of $6.00 \pm 0.20$ mm, and a ratio RB/RA is 0.10 or more and 0.70 or less, wherein the ratio RB/RA is a ratio of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, obtained from a gas chromatography analysis of an extract extracted from the test dip-molded article with an ethanol and toluene azeotropic mixture specified in JIS K 6229.

The present inventors conducted diligent investigations and found that, in a chloroprene-based polymer, by setting the content of 2,3-dichloro-1,3-butadiene monomer units, the toluene-insoluble content, and, the low-temperature hardness change for a test dip-molded article obtained from the chloroprene-based polymer, and the ratio RB/RA, which is a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, to specific numerical ranges, it is possible to obtain a chloroprene-based polymer that can yield a dip-molded article having sufficient tensile strength at break and flexibility, and capable of maintaining flexibility even after long-term storage, thereby completing the present invention.

Various embodiments of the present invention are exemplified below. The embodiments shown below can be combined with each other.

[1] A chloroprene-based polymer comprising a chloroprene monomer unit and a 2,3-dichloro-1,3-butadiene monomer unit, wherein:

the chloroprene-based polymer contains 12 to 30% by mass of the 2,3-dichloro-1,3-butadiene monomer unit with respect to 100% by mass of a total of the chloroprene monomer unit and the 2,3-dichloro-1,3-butadiene monomer unit, the chloroprene-based polymer has a toluene-insoluble content of 60 to 87% by mass, a low-temperature hardness change $\Delta H1$ of a test dip-molded article is 29 or less, wherein the test dip-molded article is obtained by molding a test chloroprene-based polymer latex composition comprising the chloroprene-based polymer by a dip coagulation method and heat-drying a molded body resulting therefrom at 130°C for 30 minutes; the low-temperature hardness change $\Delta H1$ is represented by HB1-HA1; HA1 represents a Shore hardness measured at 23°C using the durometer type A after heat-treating the test dip-molded article at 70°C for 30 minutes and then stacking the test dip-molded article to a thickness of $6.00 \pm 0.20$ mm, and HB1 represents a Shore hardness measured at -10°C using the durometer type A after heat-treating the test dip-molded article at 70°C for 30 minutes, further storing the test dip-molded article at -10°C for 168 hours, and then stacking the test dip-molded article to a thickness of $6.00 \pm 0.20$ mm, and a ratio RB/RA is 0.10 or more and 0.70 or less, wherein the ratio RB/RA is a ratio of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, obtained from a gas chromatography analysis of an extract extracted from the test dip-molded article with an ethanol and toluene azeotropic mixture specified in JIS K 6229.

[2] The chloroprene-based polymer of [1], wherein in a 13C-solid-state NMR spectrum of the chloroprene-based polymer, when a peak area from 126.2 to 127.6 ppm is PA, a peak area from 122.0 to 126.2 ppm is PB, and a peak area from 129.9 to 130.3 ppm is PC, formula (1) is satisfied:

$$\text{Formula (1): } 4.4 \leq PA/(PB - PC) \times 100 \leq 5.0$$

[3] A chloroprene-based polymer latex comprising the chloroprene-based polymer of [1] or [2] and water.

[4] A dip-molded article of a chloroprene-based polymer latex composition, the composition comprising the chloroprene-based polymer latex of [3].

[5] The dip-molded article of [4], wherein the dip-molded article is an industrial glove, a household glove, a medical glove, a balloon, a catheter, or a boot.

[6] The dip-molded article of [4] or [5], wherein a low-temperature hardness change ΔH2 is 29 or less, wherein the low-temperature hardness change ΔH2 is represented by HB2-HA2; HA2 represents a Shore hardness measured at 23°C using the durometer type A after heat-treating the dip-molded article at 70°C for 30 minutes and then stacking the dip-molded article to a thickness of 6.00 ± 0.20 mm; and HB2 represents a Shore hardness measured at -10°C using the durometer type A after heat-treating the dip-molded article at 70°C for 30 minutes, further storing the dip-molded article at -10°C for 168 hours, and then stacking the dip-molded article to a thickness of 6.00 ± 0.20 mm.

[7] A dip-molded article of a chloroprene-based polymer latex composition, the composition comprising a chloroprene-based polymer, wherein:

the dip-molded article has a low-temperature hardness change ΔH2 of 29 or less; wherein the low-temperature hardness change ΔH2 is represented by HB2-HA2; HA2 represents a Shore hardness measured at 23°C using the durometer type A after heat-treating the dip-molded article at 70°C for 30 minutes and then stacking the dip-molded article to a thickness of 6.00 ± 0.20 mm, and HB2 represents a Shore hardness measured at -10°C using the durometer type A after heat-treating the dip-molded article at 70°C for 30 minutes, further storing the dip-molded article at -10°C for 168 hours, and then stacking the dip-molded article to a thickness of 6.00 ± 0.20 mm, and

the dip-molded article has a tensile strength at break measured according to JIS K 6251 of 20.0 MPa or more, and a modulus at 500% elongation of 2.00 MPa or less.

EFFECTS OF INVENTION

According to the chloroprene-based polymer of the present invention, it is possible to obtain a dip-molded article that has sufficient tensile strength at break and flexibility, and that can maintain flexibility even after long-term storage. Specifically, it is possible to obtain a dip-molded article that has an excellent tensile strength at break, a sufficiently low modulus at 500% elongation, and a sufficiently low modulus at 500% elongation after storage at 23°C for 6 months. Furthermore, the obtained dip-molded article can be used as various members for which excellent tensile strength at break and flexibility, as well as flexibility after long-term storage, and the like are required, taking advantage of these properties. Specifically, it can be used as an industrial glove, a household glove, a medical glove, a balloon, a catheter, or a boot.

DESCRIPTION OF EMBODIMENTS

Hereinafter, the present invention will be described in detail by exemplifying embodiments of the present invention. The present invention is not limited in any way by these descriptions. The respective characteristic features of the embodiments of the present invention shown below can be combined with each other. Furthermore, an invention can be independently established for each characteristic feature.

1. Chloroprene-based Polymer

A chloroprene-based polymer according to the present invention refers to a polymer comprising a monomer unit derived from 2-chloro-1,3-butadiene (hereinafter also referred to as chloroprene). Furthermore, the chloroprene-based polymer according to the present invention comprises a chloroprene monomer unit and a 2,3-dichloro-1,3-butadiene monomer unit. The chloroprene-based polymer according to one embodiment of the present invention may also comprise a chloroprene monomer unit, a 2,3-dichloro-1,3-butadiene monomer unit, and other monomer units copolymerizable therewith. Examples of other monomers include 1-chloro-1,3-butadiene, isoprene, styrene, methacrylic acid, acrylonitrile, sulfur, and the like. As the other monomer, one of these may be included, or two or more kinds thereof may be included.

The chloroprene-based polymer according to the present invention contains 12 to 30% by mass, and preferably 14 to 27% by mass, of the 2,3-dichloro-1,3-butadiene monomer unit with respect to 100% by mass of a total of the chloroprene monomer unit and the 2,3-dichloro-1,3-butadiene monomer unit. The content rate of the 2,3-dichloro-1,3-butadiene monomer unit is, for example, 12, 13, 14, 15, 16, 17, 18, 19, 20, 21, 22, 23, 24, 25, 26, 27, 28, 29, or 30% by mass, and may be within a range between any two of the numerical values exemplified here. By setting the content rate of the 2,3-dichloro-1,3-butadiene monomer unit within the above numerical range, a dip-molded article obtained from the chloroprene-based polymer will have excellent flexibility and flexibility after long-term storage.

The chloroprene-based polymer according to one embodiment of the present invention may contain 0 to 30% by mass of other monomer units than the chloroprene monomer unit and the 2,3-dichloro-1,3-butadiene monomer unit, when the chloroprene-based polymer is taken as 100% by mass. The content rate of the other monomer units is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30, and may be within a range between any two of the numerical values exemplified here. The chloroprene-based polymer according to one embodiment of the present invention may also consist of the chloroprene monomer unit and the 2,3-dichloro-1,3-butadiene monomer unit.

When the chloroprene-based polymer is a mixture of two or more different chloroprene-based polymers, the content of each monomer unit refers to a total of each monomer unit in all chloroprene-based polymers contained in a chloroprene-based polymer latex composition.

The content rate of the 2,3-dichloro-1,3-butadiene monomer unit in the chloroprene-based polymer can be calculated by freeze-drying a latex containing the chloroprene-based polymer to obtain a test piece of the chloroprene-based polymer, measuring the test piece by pyrolysis gas chromatography, determining an area ratio of a peak derived from chloroprene and a peak derived from 2,3-dichloro-1,3-butadiene, and using a calibration curve for the 2,3-dichloro-1,3-butadiene content. Specifically, it can be measured by the method described in Examples.

The content rate of the 2,3-dichloro-1,3-butadiene monomer unit in the chloroprene-based polymer can be controlled by adjusting production conditions of the chloroprene-based polymer, for example, the type and amount of raw material formulations, and the like.

The chloroprene-based polymer according to one embodiment of the present invention has a toluene-insoluble content of 60 to 87% by mass, and preferably 75 to 87% by mass. The toluene-insoluble content is, for example, 60, 61, 62, 63, 64, 65, 66, 67, 68, 69, 70, 71, 72, 73, 74, 75, 76, 77, 78, 79, 80, 81, 82, 83, 84, 85, 86, or 87% by mass, and may be within a range between any two of the numerical values exemplified here.

The toluene-insoluble content can be determined by the following formula when a chloroprene-based polymer obtained by freeze-drying a latex containing the chloroprene-based polymer is immersed in toluene for 16 hours. Here, the chloroprene-based polymer after freeze-drying is A g, and a gel content (insoluble content) separated from a mixture dissolved in toluene is B g. Specifically, it can be determined by the method described in Examples.

$$\text{Toluene-insoluble content (gel content)} = (B/A) \times 100\ (\%)$$

The toluene-insoluble content can be controlled by adjusting production conditions of the chloroprene-based polymer, specifically, a formulation such as a polymerization recipe, a type and an amount of a chain transfer agent, and the like, a polymerization temperature, a polymerization time, a polymerization conversion rate, and the like. By setting the toluene-insoluble content within the above numerical range, a dip-molded article obtained from the chloroprene-based polymer will have an excellent tensile strength at break and excellent flexibility.

In a chloroprene-based polymer according to one embodiment of the present invention, in a 13C-solid-state NMR spectrum, when a peak area from 126.2 to 127.6 ppm is PA, a peak area from 122.0 to 126.2 ppm is PB, and a peak area from 129.9 to 130.3 ppm is PC, formula (1) is satisfied.

$$\text{Formula (1): } 4.4 \leq \text{PA}/(\text{PB} - \text{PC}) \times 100 \leq 5.0$$

A 13C-solid-state NMR spectrum is used for microstructural analysis of a polymer, and microstructure of a chloroprene-based polymer, for example, a molar ratio of each microstructure of a chloroprene-based polymer, such as a 1,4-trans linkage, a 1,4-cis linkage, a 1,2-linkage, an isomerized 1,2-linkage, a 3,4-linkage, and an isomerized 3,4-linkage, corresponds to an area of each peak in the 13C-solid-state NMR spectrum.

A peak from 126.2 to 127.6 ppm is considered to be a signal attributable to carbon of -CH= of a 1,4-cis linkage, which is a bonding unit between chloroprene monomers. Furthermore, a peak from 122.0 to 126.2 ppm is mostly a signal attributable to carbon of -CH= of a 1,4-trans linkage, which is a bonding unit between chloroprene monomer units, but it is also considered to include a signal attributable to carbon of -CH= of a chloroprene monomer unit and a 2,3-dichloro-1,3-butadiene monomer unit (123.6 to 123.9 ppm). A peak from 129.9 to 130.3 ppm is considered to be a signal attributable to carbon of -CCl= of a chloroprene monomer unit and a 2,3-dichloro-1,3-butadiene monomer unit.

Therefore, by subtracting the peak area PC from 129.9 to 130.3 ppm from the peak area PB from 122.0 to 126.2 ppm, only a component of a signal attributable to carbon of -CH= of a 1,4-trans linkage, which is a bonding unit between chloroprene monomers, can be obtained. Thus, a relational expression PA/(PB - PC) represented by the peak area PA from 126.2 to 127.6 ppm, the peak area PB from 122.0 to 126.2 ppm, and the peak area PC from 129.9 to 130.3 ppm indicates a molar ratio of 1,4-cis linkage to 1,4-trans linkage.

A value of PA/(PB - PC) × 100 is, for example, 4.4, 4.5, 4.6, 4.7, 4.8, 4.9, or 5.0, and may be within a range between any two of the numerical values exemplified here. Measurement of the 13C-solid-state NMR spectrum is performed on a chloroprene-based polymer obtained by freeze-drying a chloroprene-based polymer latex, and measurement data are referenced to a signal at 135.0 ppm attributable to carbon of -CCl= of a 1,4-trans linkage, which exhibits a maximum peak intensity in the 13C-solid-state NMR spectrum. Specifically, it can be measured by the method described in Examples. When a resolution of the 13C-solid-state NMR spectrum is low, a measurement error of a peak area may increase. However, if a rise of a peak to be measured is at a position higher than a baseline of an NMR spectrum chart, the measurement error of the peak area can be reduced by subtracting an area within a range between the baseline and the rise of the peak from the measured peak area. The value of PA/(PB - PC) × 100 can be controlled by adjusting polymerization conditions of the chloroprene-based polymer, particularly a polymerization temperature.

By setting the value of PA/(PB - PC) × 100 within the above numerical range, a dip-molded article obtained from the chloroprene-based polymer will have a more excellent tensile strength at break.

In the chloroprene-based polymer according to the present invention, a low-temperature hardness change ΔH1 of a test dip-molded article is 29 or less, the test dip-molded article being obtained by molding a test chloroprene-based polymer latex composition comprising the chloroprene-based polymer by a dip coagulation method and heat-drying a molded body resulting therefrom at 130°C for 30 minutes.

The low-temperature hardness change ΔH1 is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, or 29, and may be within a range between any two of the numerical values exemplified here.

The low-temperature hardness change ΔH1 is represented by HB1-HA1. The low-temperature hardness change ΔH1 can be determined by storing the test dip-molded article at -10°C for 168 hours and subtracting a hardness before low-temperature storage from a hardness after low-temperature storage. Specifically, HA1 represents a Shore hardness measured at 23°C using a durometer type A after heat-treating the test dip-molded article (before storing at -10°C for 168 hours) at 70°C for 30 minutes and then stacking the test dip-molded article to a thickness of 6.00 ± 0.20 mm. Furthermore, HB1 represents a Shore hardness measured at -10°C using a durometer type A after heat-treating the test dip-molded article (before said storing at -10°C for 168 hours) at 70°C for 30 minutes, further storing the test dip-molded article at -10°C for 168 hours, and then stacking the test dip-molded article to a thickness of 6.00 ± 0.20 mm. The low-temperature hardness change ΔH1 can be measured by the method described in Examples. A heat treatment at 70°C for 30 minutes is intended to melt a crystal structure contained in the test dip-molded article before storage at -10°C for 168 hours, and it is considered that the crystal structure melts by performing the heat treatment at 70°C for 30 minutes. The low-temperature hardness change ΔH1 can be controlled by adjusting production conditions of the chloroprene-based polymer.

By setting the low-temperature hardness change ΔH1 within the above numerical range, a dip-molded article obtained from the chloroprene-based polymer will have excellent flexibility after long-term storage.

In the chloroprene-based polymer according to the present invention, a ratio RB/RA of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, obtained from a gas chromatography analysis of an extract extracted from a test dip-molded article with an ethanol and toluene azeotropic mixture specified in JIS K 6229, is 0.10 or more and 0.70 or less. The RB/RA is preferably 0.15 to 0.50. The RB/RA is, for example, 0.10, 0.20, 0.30, 0.40, 0.50, 0.60, or 0.70, and may be within a range between any two of the numerical values exemplified here.

The RB/RA can be determined by extracting a test dip-molded article with an ethanol and toluene azeotropic mixture (ETA solution) specified in JIS K 6229, subjecting an extract to a hydrochloric acid treatment, analyzing the extract by gas chromatography, and calculating a content ratio RB/RA ((conjugated resin acid component b)/(non-conjugated resin acid component a)) of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, and specifically, it can be determined by the method described in Examples.

The RB/RA can be controlled by adjusting a type and an amount of an emulsifier (particularly rosin acid and/or a rosin acid salt) used during emulsion polymerization of a polymer contained in the chloroprene-based polymer. By setting the RB/RA within the above numerical range, a dip-molded article obtained from the chloroprene-based polymer will have an excellent tensile strength at break.

The chloroprene-based polymer according to one embodiment of the present invention preferably has a tensile strength at break, measured according to JIS K 6251 for a test dip-molded article prepared from a test chloroprene-based polymer latex composition, of 20.0 MPa or more, and more preferably 23.0 MPa or more. The tensile strength at break is, for example, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be within a range between any two of the numerical values exemplified here.

The chloroprene-based polymer according to one embodiment of the present invention preferably has a modulus at 500% elongation, measured according to JIS K 6251 for a test dip-molded article prepared from a test chloroprene-based polymer latex composition, of 2.00 MPa or less, and more preferably 1.80 MPa or less. The modulus at 500% elongation is, for example, 1.00, 1.10, 1.20, 1.30, 1.40, 1.50, 1.60, 1.70, 1.80, 1.90, or 2.00 MPa, and may be within a range between any two of the numerical values exemplified here.

The chloroprene-based polymer according to one embodiment of the present invention preferably has a modulus at 500% elongation, measured according to JIS K 6251 after storing a test dip-molded article prepared from a test chloroprene-based polymer latex composition at 23°C for 6 months, of 2.50 MPa or less. The modulus at 500% elongation is, for example, 1.00, 1.10, 1.20, 1.30, 1.40, 1.50, 1.60, 1.70, 1.80, 1.90, 2.00, 2.10, 2.20, 2.30, 2.40, or 2.50 MPa, and may be within a range between any two of the numerical values exemplified here.

The tensile strength at break, the modulus at 500% elongation, and the modulus at 500% elongation measured according to JIS K 6251 after storage at 23°C for 6 months can be measured by the method described in Examples.

The test dip-molded article can be obtained by preparing a test chloroprene-based polymer latex composition with a solid content concentration of 30% by mass, comprising 2 parts by mass of zinc oxide , 2 parts by mass of a butylated reaction product of p-cresol and dicyclopentadiene, 0.1 parts by mass of a sodium salt of $\beta$-naphthalenesulfonic acid formalin condensate, and water, with respect to 100 parts by mass of a solid content of the chloroprene-based polymer, molding this composition by a dip coagulation method, and heat-drying the molded product at 130°C for 30 minutes.

2. Method for Producing Chloroprene-based Polymer

A method for producing a chloroprene-based polymer according to one embodiment of the present invention is not particularly limited. The method for producing a chloroprene-based polymer according to one embodiment of the present invention can include a polymerization step of polymerizing raw material monomers containing chloroprene and 2,3-dichloro-1,3-butadiene to obtain a chloroprene-based polymer.

When producing a chloroprene-based polymer, raw material monomers are polymerized by a polymerization method such as emulsion polymerization, solution polymerization, suspension polymerization, or bulk polymerization. Among these polymerization methods, emulsion polymerization is preferable because it has various advantages such as being easy to control, allowing easy removal of the polymer from a polymerization completion liquid, and having a relatively high polymerization rate. A production method according to one embodiment of the present invention can include an emulsion polymerization step of polymerizing raw material monomers containing chloroprene and 2,3-dichloro-1,3-butadiene in the presence of an emulsifier to obtain a chloroprene-based polymer latex containing a chloroprene-based polymer. In the emulsion polymerization step, the raw material monomers containing chloroprene and 2,3-dichloro-1,3-butadiene can be emulsion polymerized by appropriately using an emulsifier, a dispersant, a polymerization initiator, a chain transfer agent, a reducing agent, and the like, and when a target polymerization rate is reached, a polymerization terminator is added to obtain the chloroprene-based polymer latex. Furthermore, unreacted monomers may be removed by a concentration method such as vacuum distillation.

(Raw Material Monomer)

In the polymerization step, the monomers include chloroprene and 2,3-dichloro-1,3-butadiene, and may also include other monomers copolymerizable with chloroprene and 2,3-dichloro-1,3-butadiene. Examples of the other monomers are as described above for monomer units that the chloroprene-based polymer can contain. Furthermore, it is preferable to adjust a type and a charged amount of each monomer so that a content rate of each monomer unit in the obtained chloroprene-based polymer falls within the numerical range described above.

(Emulsifier)

It is preferable that the emulsifier includes a rosin acid and/or a rosin acid salt. Examples of the rosin acid salt include alkali metal salts such as a sodium salt and a potassium salt. An addition amount of the rosin acid and the rosin acid salt can be 3.0 to 10.0 parts by mass with respect to 100 parts by mass of the raw material monomers to be used. The addition amount of the rosin acid and the rosin acid salt is, for example, 3.0, 3.5, 4.0, 4.5, 5.0, 5.5, 6.0, 6.5, 7.0, 7.5, 8.0, 8.5, 9.0, or 10.0 parts by mass, and may be within a range between any two of the numerical values exemplified here.

The rosin acid and/or the rosin acid salt can include a conjugated resin acid component and a non-conjugated resin acid component. Examples of the conjugated resin acid component include abietic acid, neoabietic acid, palustric acid, levopimaric acid, salts thereof, and the like. Examples of the non-conjugated resin acid component include dehydroabietic acid, pimaric acid, isopimaric acid, dihydropimaric acid, dihydroabietic acid, salts thereof, and the like.

The rosin acid and the rosin acid salt used in the emulsion polymerization step can be such that a ratio RB/RA is 0.10 or more and 0.70 or less, where RB is a total peak area of abietic acid, neoabietic acid, palustric acid, levopimaric acid, and salts thereof, and RA is a total peak area of dehydroabietic acid, pimaric acid, isopimaric acid, dihydroabietic acid, and salts thereof, obtained from a gas chromatography analysis of an extract extracted with an ethanol and toluene azeotropic mixture specified in JIS K 6229. The RB/RA of the rosin acid and the rosin acid salt is, for example, 0.10, 0.20, 0.30, 0.40, 0.50, 0.60, or 0.70, and may be within a range between any two of the numerical values exemplified here. By adjusting the type and amount of the rosin acid and/or the rosin acid salt, the RB/RA of a test dip-molded article of the obtained chloroprene-based polymer can be adjusted.

The emulsifier can also include emulsifiers and dispersants other than the rosin acid and the rosin acid salt, and as the emulsifiers and dispersants other than the rosin acid and the rosin acid salt, cationic, anionic, or nonionic emulsifiers and dispersants can be used. In one embodiment of the present invention, the emulsifier used in the emulsion polymerization step can include the rosin acid and/or the rosin acid salt, and an anionic emulsifier or dispersant. As the anionic emulsifier and dispersant, it is preferable to use a sulfate-based or sulfonate-based anionic emulsifier and dispersant in combination from a viewpoint of stabilizing the chloroprene-based polymer latex when a pH adjuster is added. Specific examples include an alkyl sulfonate having 8 to 20 carbon atoms, an alkyl aryl sulfate, a condensate of sodium β-naphthalenesulfonate and formaldehyde, and sodium alkyldiphenyl ether disulfonate. An addition amount of the anionic emulsifier or dispersant can be 0.05 to 5.0 parts by mass with respect to 100 parts by mass of the raw material monomers. The addition amount of the anionic emulsifier and dispersant with respect to 100 parts by mass of the raw material monomers is, for example, 0.05, 0.1, 0.2, 0.3, 0.5, 1.0, 1.5, 2.0, 2.5, 3.0, 3.5, 4.0, 4.5, or 5.0 parts by mass, and may be within a range between any two of the numerical values exemplified here.

(Chain Transfer Agent)

In the emulsion polymerization step, it is preferable to add a chain transfer agent to adjust a molecular weight, a molecular weight distribution, and a toluene-insoluble content of the chloroprene-based polymer. The chain transfer agent may be added at an initial stage of polymerization or during polymerization. As the chain transfer agent, long-chain alkyl mercaptans such as n-dodecyl mercaptan and t-dodecyl mercaptan, and dialkyl xanthogen disulfides such as diisopropyl xanthogen disulfide and diethyl xanthogen disulfide are preferable. Long-chain alkyl mercaptans are more preferable because they facilitate control of the molecular weight and the toluene-insoluble content. The chain transfer agent can be used singly or in combination of two or more kinds. A total addition amount of the chain transfer agent added during emulsion polymerization is preferably 0.005 to 0.12 parts by mass with respect to 100 parts by mass of a chloroprene monomer and monomers copolymerizable with the chloroprene monomer. The total addition amount of the chain transfer agent is, for example, 0.005, 0.01, 0.05, 0.10, 0.11, or 0.12 parts by mass, and may be within a range between any two of the numerical values exemplified here.

(Initiator)

As a polymerization initiator, a usual radical polymerization initiator can be used. Specifically, organic or inorganic peroxides such as benzoyl peroxide, potassium persulfate, and ammonium persulfate, and azo compounds such as azobisisobutyronitrile are used. Furthermore, a co-catalyst such as an anthraquinone sulfonate salt, potassium sulfite, or sodium sulfite may be appropriately used in combination.

(Potassium Hydroxide and Sodium Hydroxide)

In the emulsion polymerization step, sodium hydroxide and/or potassium hydroxide can be used. Sodium hydroxide and potassium hydroxide can be used in an amount of 0.01 to 2.0 parts by mass with respect to 100 parts by mass of the raw material monomers.

(Reducing Agent)

In the emulsion polymerization step, a reducing agent can be added. Examples of the reducing agent include potassium pyrosulfite, potassium sulfite, potassium bisulfite, potassium phosphate, potassium hydrogen phosphate, sodium bisulfite, sodium sulfate, thiourea dioxide, and the like. An addition amount of the reducing agent can be 0.005 to 3.0 parts by mass with respect to 100 parts by mass of the raw material monomers used in the polymerization step.

(Polymerization Conversion Rate)

A polymerization conversion rate of raw material monomers during emulsion polymerization of a chloroprene-based polymer or the like is preferably 50% by mass or more and less than 90% by mass. The polymerization conversion rate (% by mass) is determined by [(mass of polymer / total mass of monomers) × 100]. Hereinafter, the polymerization conversion rate may also be simply referred to as a polymerization rate.

(Polymerization Temperature)

The chloroprene-based polymer can be polymerized, for example, in a range of 0 to 45°C, and it is particularly preferable to polymerize at a low temperature of 5 to 20°C. The polymerization temperature is, for example, 0, 5, 10, 15, 20, 25, 30, 35, 40, or 45°C, and may be within a range between any two of the numerical values exemplified here. By adjusting the polymerization temperature, a microstructure in the chloroprene-based polymer can be adjusted, and in particular, a value of PA/(PB - PC) × 100 can be controlled; for example, by lowering the polymerization temperature, the value of PA/(PB - PC) × 100 can be reduced.

(Polymerization Terminator)

Generally, in production of a chloroprene-based polymer, for the purpose of obtaining a polymer having a desired molecular weight and distribution, a polymerization terminator is added to stop a reaction when a predetermined polymerization rate is reached. The polymerization terminator is not particularly limited, but phenothiazine, p-t-butylcatechol, hydroquinone, hydroquinone monomethyl ether, diethylhydroxylamine and the like can be used.

(Solid Content Concentration)

The method for producing a chloroprene-based polymer latex according to one embodiment of the present invention can include a step of removing unreacted monomers by a concentration method such as vacuum distillation. A solid content concentration of the chloroprene-based polymer latex is not particularly limited, but can be adjusted to 40 to 65% by mass. The solid content concentration of the chloroprene-based polymer latex can be controlled by adjusting a blending ratio including a solvent such as water during emulsion polymerization of the chloroprene-based polymer, or by a concentration step such as vacuum distillation.

Furthermore, to a composition (for example, a latex) containing a chloroprene-based polymer obtained by the production method of one embodiment of the present invention, a freeze stabilizer, an emulsion stabilizer, a viscosity modifier, an antioxidant, a preservative, and the like can be arbitrarily added after polymerization, within a range that does not impair the effects of the present invention.

In the polymerization step of the chloroprene-based polymer, polymerization can be started after charging all of the raw material monomers and agents used in the polymerization step into a polymerization vessel before the start of polymerization, or at least a part of the raw material monomers and/or agents used in the polymerization step can be charged into the polymerization vessel before the start of polymerization, and the remainder can be added portion-wise after the start of polymerization.

When at least a part of the raw material monomers and agents is charged into the polymerization vessel before the start of polymerization, and the remaining raw material monomers and/or agents are added after the start of polymerization, the remaining raw material monomers and/or agents can be added portion-wise in one or more portions, or can be added continuously at a constant flow rate. In one embodiment of the present invention, at least a part of the raw material monomers can be added portion-wise after the start of polymerization. As one example, when chloroprene and 2,3-dichloro-1,3-butadiene are used as the raw material monomers, a part of the 2,3-dichloro-1,3-butadiene can be added portion-wise after the start of polymerization.

3. Chloroprene-based Polymer Latex

A chloroprene-based polymer latex according to one embodiment of the present invention can include a chloroprene-based polymer and water. A latex containing a chloroprene-based polymer, which contains a chloroprene polymer obtained after polymerization of the chloroprene-based polymer, can be referred to as a chloroprene-based polymer latex. When the polymer contained in the chloroprene-based polymer according to the present invention is obtained by emulsion polymerization, the chloroprene-based polymer latex can further include raw materials used in an emulsion polymerization step, such as an emulsifier.

4. Dip-molded Article (Dip-molded Article Coating and Film)

The dip-molded article according to one embodiment of the present invention can be a dip-molded article of a chloroprene-based polymer latex composition containing a chloroprene-based polymer latex.

The dip-molded article according to one embodiment of the present invention can be a dip-molded article obtained by subjecting a dip-molded body, which is obtained by dip-molding a chloroprene-based polymer latex composition described later by a dip coagulation method, to a heat-drying treatment at 130°C for 30 minutes. The dip-molded article according to the present invention has a high tensile strength at break, a low modulus at 500% elongation, and a low modulus at 500% elongation after long-term storage. The dip-molded article according to one embodiment of the present invention can be suitably used as an industrial glove, a household glove, a medical glove, a balloon, a catheter, or a boot.

The dip-molded article according to the present invention may have components contained in a chloroprene-based polymer latex composition described later. Furthermore, the dip-molded article can include a chloroprene-based polymer as a base polymer, and when the dip-molded article is taken as 100% by mass, it can include 70% by mass or more of the chloroprene-based polymer, preferably 80% by mass or more, and more preferably 90% by mass or more. A content rate of the chloroprene-based polymer in the dip-molded article, when the dip-molded article is taken as 100% by mass, is, for example, 70, 75, 80, 85, 90, 95, 96, 97, 98, 99, or 100% by mass, and may be within a range between any two of the numerical values exemplified here.

The dip-molded article containing the chloroprene-based polymer according to the present invention has a high tensile strength at break, a low modulus at 500% elongation, and a low modulus at 500% elongation after long-term storage, regardless of whether a vulcanizing agent and a vulcanization accelerator are added or not. Furthermore, a dip-molded article according to one embodiment of the present invention can be free of a vulcanizing agent and a vulcanization accelerator, and may be free of sulfur and vulcanization accelerators such as thiuram-based, dithiocarbamate-based, thiourea-based, guanidine-based, xanthate-based, and thiazole-based ones.

4.1 Properties of Dip-molded Article

It is preferable that the dip-molded article according to one embodiment of the present invention has a low-temperature hardness change $\Delta H2$ of 29 or less. The low-temperature hardness change $\Delta H2$ is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, or 29, and may be within a range between any two of the numerical values exemplified here. The low-temperature hardness change $\Delta H2$ is represented by HB2-HA2, where HA2 represents a Shore hardness measured at 23°C using the durometer type A after heat-treating the dip-molded article at 70°C for 30 minutes and then stacking the dip-molded article to a thickness of $6.00 \pm 0.20$ mm, and HB2 represents a Shore hardness measured at -10°C using the durometer type A after heat-treating the dip-molded article at 70°C for 30 minutes, further storing the dip-molded article at -10°C for 168 hours, and then stacking the dip-molded article to a thickness of $6.00 \pm 0.20$ mm.

It is preferable that, in the dip-molded article according to one embodiment of the present invention, a ratio RB/RA of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, obtained from a gas chromatography analysis of an extract extracted with an ethanol and toluene azeotropic mixture specified in JIS K 6229, is 0.10 or more and 0.70 or less. The RB/RA is, for example, 0.10, 0.20, 0.30, 0.40, 0.50, 0.60, or 0.70, and may be within a range between any two of the numerical values exemplified here.

The dip-molded article according to one embodiment of the present invention can contain 12 to 30% by mass, and preferably 14 to 27% by mass, of a 2,3-dichloro-1,3-butadiene monomer unit with respect to 100% by mass of a total of a chloroprene monomer unit and the 2,3-dichloro-1,3-butadiene monomer unit. The content rate of the 2,3-dichloro-1,3-butadiene monomer unit is, for example, 12, 13, 14, 15, 16, 17, 18, 19, 20, 21, 22, 23, 24, 25, 26, 27, 28, 29, or 30% by mass, and may be within a range between any two of the numerical values exemplified here.

The dip-molded article according to one embodiment of the present invention preferably has a tensile strength at break, measured according to JIS K 6251, of 20.0 MPa or more, and more preferably 23.0 MPa or more. The tensile strength at break is, for example, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be within a range between any two of the numerical values exemplified here.

The dip-molded article according to one embodiment of the present invention preferably has a modulus at 500% elongation, measured according to JIS K 6251, of 2.00 MPa or less, and more preferably 1.80 MPa or less. The modulus at 500% elongation is, for example, 1.00, 1.10, 1.20, 1.30, 1.40, 1.50, 1.60, 1.70, 1.80, 1.90, or 2.00 MPa, and may be within a range between any two of the numerical values exemplified here.

The dip-molded article according to one embodiment of the present invention preferably has a modulus at 500% elongation, measured according to JIS K 6251 after storage at 23°C for 6 months, of 2.50 MPa or less. The modulus at 500% elongation is, for example, 1.00, 1.10, 1.20, 1.30, 1.40, 1.50, 1.60, 1.70, 1.80, 1.90, 2.00, 2.10, 2.20, 2.30, 2.40, or 2.50 MPa, and may be within a range between any two of the numerical values exemplified here.

Measurement methods for the low-temperature hardness change $\Delta H2$, the RB/RA, the tensile strength at break, the modulus at 500% elongation, and the modulus at 500% elongation after storage at 23°C for 6 months of the dip-molded article are as described above in the section for the chloroprene-based polymer.

The dip-molded article according to one embodiment of the present invention can have a low-temperature hardness change $\Delta H2$ of 29 or less, a tensile strength at break measured according to JIS K 6251 of 20.0 MPa or more, and a modulus at 500% elongation of 2.00 MPa or less. Furthermore, the dip-molded article according to one embodiment of the present invention can be such that any three or more, four or more, or all of the low-temperature hardness change $\Delta H2$,

the RB/RA, the tensile strength at break, the modulus at 500% elongation, and the modulus at 500% elongation after storage at 23°C for 6 months of the dip-molded article satisfy the above requirements.

The dip-molded article according to one embodiment of the present invention can include a chloroprene-based polymer, and can further include an antioxidant or a metal oxide. Furthermore, the above-mentioned dip-molded article may include a vulcanizing agent, a vulcanization accelerator, and a crosslinking agent. A method for producing the dip-molded article can be as described in Examples.

Furthermore, the low-temperature hardness change $\Delta H2$, the RB/RA, the tensile strength at break, the modulus at 500% elongation, and the modulus at 500% elongation after storage at 23°C for 6 months of the dip-molded article can be controlled by adjusting a method for producing the chloroprene-based polymer, as one example, a type and an amount of raw material formulations, a type and an amount of agents to be used, and polymerization conditions.

4.2 Shape of Dip-molded Article

A thickness (for example, a minimum thickness) of the dip-molded article may be 0.01 to 0.50 mm. The thickness of the dip-molded article is, for example, 0.01, 0.05, 0.10, 0.20, 0.30, 0.40, or 0.50 mm, and may be within a range between any two of the numerical values exemplified here. The thickness of the dip-molded article can be adjusted by a time for which a mold is immersed in a chloroprene-based polymer latex composition, a solid content concentration of the chloroprene-based polymer latex composition, and the like. When it is desired to reduce the thickness of the dip-molded article, the immersion time may be shortened, or the solid content concentration of the chloroprene-based polymer latex composition may be lowered.

The dip-molded article may include sulfur or a vulcanization accelerator. However, the dip-molded article according to one embodiment of the present invention can have mechanical properties equivalent to or better than those of a vulcanized dip-molded article obtained from a chloroprene-based polymer latex composition containing a conventional chloroprene-based polymer, even without including sulfur or a vulcanization accelerator. For this reason, the chloroprene-based polymer according to the present invention is suitably used as a raw material for a dip-molded article (dip-molded body) of the chloroprene-based polymer of the present embodiment.

5. Method for Producing Dip-molded Article

A method for producing a dip-molded article according to one embodiment of the present invention can include:

a dip-molding step of dip-molding a chloroprene-based polymer latex composition containing the above-described chloroprene-based polymer to obtain a dip-molded body, and
a drying step of heat-drying the dip-molded body to obtain a dip-molded article.

5.1 Chloroprene-based Polymer Latex Composition

The chloroprene-based polymer latex composition according to one embodiment of the present invention includes the above-described chloroprene-based polymer. The chloroprene-based polymer latex composition according to one embodiment of the present invention may include, in addition to the chloroprene-based polymer, a metal oxide, an antioxidant, and other necessary agents. The chloroprene-based polymer latex composition according to one embodiment of the present invention may be free of a vulcanizing agent and a vulcanization accelerator, and may be free of sulfur and vulcanization accelerators such as thiuram-based, dithiocarbamate-based, thiourea-based, guanidine-based, xanthate-based, and thiazole-based ones.

5.1.1 Metal Oxide

The chloroprene-based polymer latex composition according to one embodiment of the present invention can include a metal oxide.

The metal oxide is not particularly limited, and examples thereof include zinc oxide, lead oxide, trilead tetraoxide, magnesium oxide, aluminum oxide, iron oxide, beryllium oxide, titanium oxide, and the like. It is preferable that the metal oxide includes zinc oxide. Zinc oxide is generally considered to function as a scavenger for chlorine atoms eliminated from a chloroprene-based polymer. Furthermore, these metal oxides may be used singly, or two or more kinds thereof may be used as a mixture.

An addition amount of the metal oxide is preferably 0.5 to 15.0 parts by mass with respect to 100 parts by mass of a solid content of the chloroprene-based polymer contained in the chloroprene-based polymer latex composition. When the addition amount of the metal oxide is 0.5 parts by mass or more, an improvement in tensile strength at break can be expected due to a crosslinking effect between polymers. When the addition amount of the metal oxide is 15.0 parts by mass or less, a dip-molded article excellent in flexibility can be obtained. Furthermore, from a viewpoint of a balance between flexibility and tensile strength at break of the obtained dip-molded article, the addition amount of the metal oxide is more preferably 0.5 to 5.0 parts by mass.

5.1.2 Antioxidant

The chloroprene-based polymer latex composition according to one embodiment of the present invention can also include an antioxidant. The antioxidant is not particularly limited, and a phenol-based antioxidant, an amine-based antioxidant, a heat-resistant antioxidant (anti-aging agent), an ozone-resistant antioxidant, and the like can be used. When an obtained dip-molded article is used for medical glove applications, a phenol-based antioxidant can be employed from viewpoints of a color tone, a texture, and hygiene of the dip-molded article. In particular, a hindered phenol-based antioxidant has a strong effect as described above. Examples of the hindered phenol-based antioxidant include 2,2'-methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), a butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferable from a viewpoint that it is generally dispersible in an aqueous material. Furthermore, these compounds may be used singly, or two or more kinds thereof may be used as a mixture.

An addition amount of the antioxidant is preferably 0.5 to 10.0 parts by mass with respect to 100 parts by mass of a solid content of the chloroprene-based polymer contained in the chloroprene-based polymer latex composition. The addition amount of the antioxidant is, for example, 1.0, 2.0, 3.0, 4.0, 5.0, 6.0, 7.0, 8.0, 9.0, or 10.0 parts by mass, and may be within a range between any two of the numerical values exemplified here. When the addition amount of the antioxidant is 0.5 parts by mass or more, an effect of suppressing a color change of the dip-molded article can be obtained. When the addition amount of the antioxidant is 10.0 parts by mass or less, stability of the chloroprene-based polymer latex composition is ensured. Furthermore, from a viewpoint of a balance between flexibility and tensile strength at break of the obtained dip-molded article, the addition amount of the antioxidant is more preferably 0.5 to 5.0 parts by mass.

5.1.3 Vulcanizing Agent and Vulcanization Accelerator

The chloroprene-based polymer latex composition according to one embodiment of the present invention can also include a vulcanizing agent and/or a vulcanization accelerator. Furthermore, the chloroprene-based polymer latex composition according to one embodiment of the present invention may be free of sulfur and the aforementioned vulcanization accelerators such as thiuram-based, dithiocarbamate-based, thiourea-based, guanidine-based, xanthate-based, and thiazole-based ones. That is, the chloroprene-based polymer latex composition encompasses those containing a vulcanizing agent and not containing a vulcanization accelerator, those not containing a vulcanizing agent and containing a vulcanization accelerator, those containing both a vulcanizing agent and a vulcanization accelerator, and those not containing either a vulcanizing agent or a vulcanization accelerator. Whether to blend a vulcanizing agent and a vulcanization accelerator may be determined according to an intended dip-molded article.

Examples of the vulcanizing agent include sulfur and the like, but are not limited thereto. An addition amount of the vulcanizing agent can be 0 to 10.0 parts by mass with respect to 100 parts by mass of a solid content of the chloroprene-based polymer contained in the chloroprene-based polymer latex composition. The addition amount of the vulcanizing agent is, for example, 0, 1, 2, 3, 4, 5, 6, 7, 8, 9, or 10 parts by mass, and may be within a range between any two of the numerical values exemplified here.

A vulcanization accelerator is an agent added for the purpose of increasing a vulcanization rate, shortening a vulcanization time, lowering a vulcanization temperature, reducing an amount of a vulcanizing agent, and improving physical properties of a vulcanized rubber by acting with the vulcanizing agent during vulcanization of a raw rubber, and usually refers to an agent that accelerates a sulfur vulcanization reaction.

Examples of the vulcanization accelerator include thiuram-based, dithiocarbamate-based, thiourea-based, guanidine-based, xanthate-based, thiazole-based ones, and the like, but are not limited thereto. These are used singly or in combination of two or more kinds as necessary.

Examples of a thiuram-based vulcanization accelerator include tetramethylthiuram disulfide, tetraethylthiuram disulfide, tetrabutylthiuram disulfide, tetrakis(2-ethylhexyl)thiuram disulfide, tetramethylthiuram monosulfide, dipentamethylenethiuram tetrasulfide, and the like.

Examples of a dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like, and zinc dibutyldithiocarbamate is particularly preferably used.

Examples of a thiourea-based vulcanization accelerator include ethylenethiourea, N,N'-diethylthiourea, trimethylthiourea, N,N'-diphenylthiourea, and the like.

Examples of a guanidine-based vulcanization accelerator include 1,3-diphenylguanidine, 1,3-di-o-tolylguanidine, 1-o-tolylbiguanide, di-o-tolylguanidine salt of dicatechol boric acid, and the like.

Examples of a xanthate-based vulcanization accelerator include zinc butylxanthate, zinc isopropylxanthate and the like,

Examples of a thiazole-based vulcanization accelerator include 2-mercaptobenzothiazole, di-2-benzothiazolyl disulfide, a zinc salt of 2-mercaptobenzothiazole, a cyclohexylamine salt of 2-mercaptobenzothiazole, 2-(4'-morpholinodithio)benzothiazole, and the like.

An addition amount of the vulcanization accelerator can be 0 to 5.0 parts by mass with respect to 100 parts by mass of a solid content of the chloroprene-based polymer contained in the chloroprene-based polymer latex composition. The addition amount of the vulcanization accelerator is, for example, 0, 0.5, 1.0, 1.5, 2.0, 2.5, 3.0, 3.5, 4.0, 4.5, or 5.0, and may be within a range between any two of the numerical values exemplified here.

The method for producing a chloroprene-based polymer latex composition according to one embodiment of the present invention can include a raw material mixing step of mixing raw materials including a chloroprene-based polymer, a metal oxide, an antioxidant, and other necessary agents.

In the mixing step, an aqueous dispersion containing the metal oxide, the antioxidant, and other necessary agents can be prepared in advance, and then the chloroprene-based polymer and the aqueous dispersion can be mixed.

The mixing step can be performed with a known mixing apparatus such as a ball mill.

5.2 Dip-molding Step

The method for producing a dip-molded article according to one embodiment of the present invention can include a dip-molding step of dip-molding a chloroprene-based polymer latex composition containing a chloroprene-based polymer obtained by the above-described method for producing a chloroprene-based polymer to obtain a dip-molded body.

Examples of the dip-molding method of one embodiment of the present invention include a dip coagulation method, a simple dipping method, a heat-sensitive dipping method, an electrodeposition method, and the like. From a viewpoint of ease of production and a viewpoint of easily obtaining a dip-molded body with a uniform thickness, the dip coagulation method can be used. Specifically, a ceramic mold coated with a calcium-based coagulant solution is immersed in a chloroprene-based polymer latex composition to coagulate the chloroprene-based polymer latex composition. Then, after removing water-soluble impurities by leaching, it is dried, and further heated and vulcanized to form a dip-molded film (rubber coating), after which the dip-molded film is released from the mold. Thereby, a film-like dip-molded body can be obtained.

5.3 Drying Step

The method for producing a dip-molded article according to one embodiment of the present invention can include a drying step of heat-drying the dip-molded body to obtain a dip-molded article.

A heating temperature may be appropriately set according to a composition of the chloroprene-based polymer, and may be 120 to 180°C. The heating temperature is preferably 120 to 150°C. The heating temperature is, for example, 120, 130, 140, 150, 160, 170, 180, 190, 200, 210, or 220°C, and may be within a range between any two of the numerical values exemplified here. A heating time may be appropriately set according to the composition of the chloroprene-based polymer, a shape of an unvulcanized molded body, and the like, and may be 10 to 300 minutes. The heating time is, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 minutes, and may be within a range between any two of the numerical values exemplified here. As one example, the dip-molded article according to one embodiment of the present invention can be one subjected to a heat-drying treatment at 130°C for 30 minutes.

EXAMPLES

Hereinafter, the present invention will be described in more detail based on Examples, but the present invention is not to be construed as being limited thereto.

(Example 1)

Into a polymerization vessel with an internal volume of 30 L, 80 parts by mass of chloroprene (monomer), 20 parts by mass of 2,3-dichloro-1,3-butadiene, 90 parts by mass of pure water, 4.6 parts by mass of a conjugated resin acid-based rosin acid (product name "HARTALL R-WW", manufactured by Harima Chemicals Group, Inc.), 0.03 parts by mass of n-dodecyl mercaptan, 1.6 parts by mass of potassium hydroxide, 0.5 parts by mass of a sodium salt of β-naphthalenesulfonic acid formalin condensate (product name "Demol N", manufactured by Kao Corporation), 0.5 parts by mass of sodium bisulfite, and 0.03 parts by mass of thiourea dioxide were added. Polymerization was carried out at a polymerization temperature of 15°C under a nitrogen stream by continuously adding a 0.35% by mass aqueous solution of potassium persulfate as a polymerization initiator. When a polymerization rate reached 83%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass.

For physical property measurement, 200 mL of the obtained chloroprene-based polymer latex was sampled, and a test dip-molded article was prepared using the remaining latex.

Using the sampled chloroprene-based polymer latex, a 2,3-dichloro-1,3-butadiene content of the chloroprene-based polymer was measured. Furthermore, a toluene-insoluble content of the chloroprene-based polymer was measured. Furthermore, a nuclear magnetic resonance analysis (13C-solid-state NMR) spectrum of the chloroprene-based polymer was measured. Analysis results are shown in Table 1. Measurement methods will be described later.

(Example 2)

Polymerization was carried out in the same manner as in Example 1, except that in Example 1, chloroprene (monomer) was used in an amount of 85 parts by mass and 2,3-dichloro-1,3-butadiene was used in an amount of 15 parts by mass. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Example 3)

Into a polymerization vessel with an internal volume of 30 L, 87 parts by mass of chloroprene (monomer), 7 parts by mass of 2,3-dichloro-1,3-butadiene, 90 parts by mass of pure water, 4.6 parts by mass of a conjugated resin acid-based rosin acid (product name "HARTALL R-WW", manufactured by Harima Chemicals Group, Inc.), 0.03 parts by mass of n-dodecyl mercaptan, 1.6 parts by mass of potassium hydroxide, 0.5 parts by mass of a sodium salt of β-naphthalenesulfonic acid formalin condensate (product name "Demol N", manufactured by Kao Corporation), 0.5 parts by mass of sodium bisulfite, and 0.03 parts by mass of thiourea dioxide were added. Polymerization was carried out at a polymerization temperature of 15°C under a nitrogen stream by continuously adding a 0.35% by mass aqueous solution of potassium persulfate as a polymerization initiator. When a polymerization rate of the charged monomers reached 15%, 6 parts by mass of 2,3-dichloro-1,3-butadiene was continuously added over 120 minutes. When a polymerization rate of the initially charged monomers and the continuously added monomers reached 83%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Example 4)

Polymerization was carried out in the same manner as in Example 1, except that polymerization was stopped at a polymerization rate of 70%. The obtained polymerization liquid was subjected to vacuum distillation to remove unreacted monomers, and further to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Example 5)

Polymerization was carried out in the same manner as in Example 1, except that polymerization was stopped at a polymerization rate of 64%. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Example 6)

Into a polymerization vessel with an internal volume of 30 L, 80 parts by mass of chloroprene (monomer), 20 parts by mass of 2,3-dichloro-1,3-butadiene, 90 parts by mass of pure water, 2.2 parts by mass of a conjugated resin acid-based rosin acid (product name "HARTALL R-WW", manufactured by Harima Chemicals Group, Inc.), 9.6 parts by mass of potassium disproportionated gum rosinate (aqueous solution) (product name "RONDIS K-25", manufactured by Arakawa Chemical Industries, Ltd.), 0.03 parts by mass of n-dodecyl mercaptan, 1.6 parts by mass of potassium hydroxide, 0.5 parts by mass of a sodium salt of β-naphthalenesulfonic acid formalin condensate (product name "Demol N", manufactured by Kao Corporation), 0.5 parts by mass of sodium bisulfite, and 0.03 parts by mass of thiourea dioxide were added. Polymerization was carried out at a polymerization temperature of 15°C under a nitrogen stream by continuously adding a 0.35% by mass aqueous solution of potassium persulfate as a polymerization initiator. When a polymerization rate reached 83%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Example 7)

Polymerization was carried out in the same manner as in Example 1, except that the conjugated resin acid-based rosin acid of Example 1 was used in an amount of 9 parts by mass. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Example 8)

Into a polymerization vessel with an internal volume of 30 L, 90 parts by mass of chloroprene (monomer), 10 parts by mass of 2,3-dichloro-1,3-butadiene, 90 parts by mass of pure water, 4.6 parts by mass of a conjugated resin acid-based rosin acid (product name "HARTALL R-WW", manufactured by Harima Chemicals Group, Inc.), 0.03 parts by mass of n-dodecyl mercaptan, 1.6 parts by mass of potassium hydroxide, 0.5 parts by mass of a sodium salt of β-naphthalenesulfonic acid formalin condensate (product name "Demol N", manufactured by Kao Corporation), and 0.5 parts by mass of sodium bisulfite were added. Polymerization was carried out at a polymerization temperature of 40°C under a nitrogen stream by continuously adding a 0.35% by mass aqueous solution of potassium persulfate as a polymerization initiator. When a polymerization rate reached 70%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

**EP 4 660 210 A1**

(Example 9)

Into a polymerization vessel with an internal volume of 30 L, 85 parts by mass of chloroprene (monomer), 15 parts by mass of 2,3-dichloro-1,3-butadiene, 90 parts by mass of pure water, 4.3 parts by mass of a conjugated resin acid-based rosin acid (product name "HARTALL R-WW", manufactured by Harima Chemicals Group, Inc.), 0.5 parts by mass in terms of solid content of potassium disproportionated gum rosinate aqueous solution (product name "RONDIS K-25", manufactured by Arakawa Chemical Industries, Ltd.), 0.03 parts by mass of n-dodecyl mercaptan, 1.5 parts by mass of potassium hydroxide, and 0.5 parts by mass of a sodium salt of $\beta$-naphthalenesulfonic acid formalin condensate (product name "Demol N", manufactured by Kao Corporation) were added. Polymerization was carried out at a polymerization temperature of 20°C under a nitrogen stream by continuously adding a 0.35% by mass aqueous solution of potassium persulfate as a polymerization initiator. When a polymerization rate reached 83%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 1.

(Comparative Example 1)

Polymerization was carried out in the same manner as in Example 1, except that in Example 1, chloroprene (monomer) was used in an amount of 90 parts by mass and 2,3-dichloro-1,3-butadiene was used in an amount of 10 parts by mass. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 2)

Polymerization was carried out in the same manner as in Example 1, except that in Example 1, chloroprene (monomer) was used in an amount of 93 parts by mass and 2,3-dichloro-1,3-butadiene was used in an amount of 7 parts by mass. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 3)

Polymerization was carried out in the same manner as in Example 1, except that the conjugated resin acid-based rosin acid was used in an amount of 11 parts by mass. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 4)

Into a polymerization vessel with an internal volume of 30 L, 80 parts by mass of chloroprene (monomer), 20 parts by mass of 2,3-dichloro-1,3-butadiene, 90 parts by mass of pure water, 18.4 parts by mass of potassium disproportionated gum rosinate (aqueous solution) (product name "RONDIS K-25", manufactured by Arakawa Chemical Industries, Ltd.), 0.03 parts by mass of n-dodecyl mercaptan, 0.8 parts by mass of potassium hydroxide, 0.5 parts by mass of a sodium salt of β-naphthalenesulfonic acid formalin condensate (product name "Demol N", manufactured by Kao Corporation), 0.5 parts by mass of sodium bisulfite, and 0.03 parts by mass of thiourea dioxide were added. Polymerization was carried out at a polymerization temperature of 15°C under a nitrogen stream by continuously adding a 0.35% by mass aqueous solution of potassium persulfate as a polymerization initiator. When a polymerization rate reached 83%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 5)

Polymerization was carried out in the same manner as in Example 1, except that the polymerization rate at which polymerization was stopped was 50%. The obtained polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 6)

Into a polymerization vessel with an internal volume of 30 L, 80 parts by mass of chloroprene (monomer), 20 parts by mass of 2,3-dichloro-1,3-butadiene, 90 parts by mass of pure water, 4.8 parts by mass of a conjugated resin acid-based rosin acid (product name "HARTALL R-WW", manufactured by Harima Chemicals Group, Inc.), 0.03 parts by mass of n-dodecyl mercaptan, 1.5 parts by mass of potassium hydroxide, and 0.5 parts by mass of a sodium salt of β-naphthalenesulfonic acid formalin condensate (product name "Demol N", manufactured by Kao Corporation) were added. Polymerization was carried out at a polymerization temperature of 10°C under a nitrogen stream by continuously adding a 0.35% by mass aqueous solution of potassium persulfate as a polymerization initiator. When a polymerization rate reached 89%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 7)

Polymerization was carried out in the same manner as in Comparative Example 6, except that the polymerization temperature of Comparative Example 6 was 17°C and the polymerization rate at which polymerization was stopped was 87%. The obtained polymerization liquid was subjected to vacuum distillation to remove unreacted monomers and to a concentration operation, thereby obtaining a chloroprene-based polymer latex having a solid content concentration of 60% by mass.With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

(Comparative Example 8)

Into a polymerization vessel with an internal volume of 30 L, 85 parts by mass of chloroprene (monomer), 15 parts by mass of 2,3-dichloro-1,3-butadiene, 100 parts by mass of pure water, 4.8 parts by mass of a conjugated resin acid-based rosin acid (product name "HARTALL R-WW", manufactured by Harima Chemicals Group, Inc.), 1.5 parts by mass of potassium hydroxide, and 0.4 parts by mass of a sodium salt of β-naphthalenesulfonic acid formalin condensate (product name "Demol N", manufactured by Kao Corporation) were added. Polymerization was carried out at a polymerization temperature of 15°C under a nitrogen stream by continuously adding a 0.35% by mass aqueous solution of potassium persulfate as a polymerization initiator. When a polymerization rate reached 67%, 0.1 parts by mass of diethylhydroxylamine, which is a polymerization terminator, was added to stop the polymerization, thereby obtaining a polymerization liquid. The polymerization liquid was subjected to vacuum distillation to remove unreacted monomers and to a concentration operation, thereby obtaining a chloroprene-based polymer latex having a solid content concentration of 60% by mass. With the obtained latex, a test dip-molded article was prepared in the same manner as in Example 1. Furthermore, in the same manner as in Example 1, measurement of the 2,3-dichloro-1,3-butadiene content of the chloroprene-based polymer, measurement of the toluene-insoluble content, and measurement of a nuclear magnetic resonance analysis (13C-solid-state NMR) spectrum were performed. Analysis results are shown in Table 2.

<Measurement of 2,3-Dichloro-1,3-butadiene Content of Chloroprene-based Polymer>

A chloroprene-based polymer obtained by freeze-drying a chloroprene-based polymer latex was cut into a test piece of 0.05 mg, and the test piece was measured by pyrolysis gas chromatography to determine an area ratio of a peak derived from chloroprene and a peak derived from 2,3-dichloro-1,3-butadiene. Using a calibration curve between the area ratio of the peak derived from chloroprene and the peak derived from 2,3-dichloro-1,3-butadiene and the 2,3-dichloro-1,3-butadiene content, a content (% by mass) of the 2,3-dichloro-1,3-butadiene monomer unit with respect to 100% by mass of a total of the chloroprene monomer unit and the 2,3-dichloro-1,3-butadiene monomer unit was determined. Results are shown in Table 1 and Table 2.

[Pyrolysis Gas Chromatography Measurement Conditions]

Apparatus name: HP5890-II
Column: DB-5 0.25 mm$\varphi$ (diameter)$\times$ 30 m (film thickness 1.0 $\mu$m)
Column temperature: 50°C (5 min) $\rightarrow$ 10°C/min $\rightarrow$ 150°C $\rightarrow$ 25°C/min $\rightarrow$ 300°C
Inlet port temperature: 250°C
Detector temperature: 280°C
Detector: FID

<Toluene-insoluble Content>

A chloroprene-based polymer obtained by freeze-drying a chloroprene-based polymer latex was cut into 2 mm squares to obtain a test piece. After placing this test piece in a conical beaker, the test piece was dissolved in 80 g of toluene over 16 hours. Subsequently, after centrifugation, a gel content (insoluble content) was separated using a 200-mesh wire gauze. Thereafter, the gel content was dried, and then a mass of the dried material was measured. The toluene-insoluble content in the chloroprene-based polymer was determined by the following formula, where A is the mass in g of the chloroprene-based polymer after freeze-drying, and B is the mass in g of the gel content (insoluble content) separated from a mixture dissolved in toluene. Results are shown in Table 1 and Table 2.

$$\text{Toluene-insoluble content (gel content)} = (B/A) \times 100\ (\%)$$

<Calculation of PA/(PB - PC) $\times$ 100 Based on Measurement of Nuclear Magnetic Resonance Analysis (13C-Solid-State NMR) Spectrum>

A chloroprene-based polymer obtained by freeze-drying a chloroprene-based polymer latex was analyzed using JNM-ECX-400 (400 MHz, FT type) manufactured by JEOL Ltd. In an obtained 13C-solid-state NMR spectrum, with a signal at 135.0 ppm attributable to carbon of -CCl= of a 1,4-trans linkage, which exhibits a maximum peak intensity, as a reference, a peak area PA at 126.2 to 127.6 ppm, a peak area PB at 122.0 to 126.2 ppm, and a peak area PC at 129.9 to 130.3 ppm were determined. As for the peak area PA and the peak area PC, after determining the values of the peak area PA and the peak area PC when the peak area PB from 122.0 to 126.2 ppm is taken as 100, PA/(PB - PC) $\times$ 100 was calculated. Results are shown in Table 1 and Table 2.

<Measurement Conditions for Nuclear Magnetic Resonance Analysis (13C-Solid-State NMR)>

Nuclear magnetic resonance analysis (13C-solid-state NMR) was performed under the following measurement conditions.

Measurement mode: Magic Angle Spinning

Flip angle: 90 degrees
Waiting time: 5.0 seconds
Sample rotation speed: 15 kHz
Window processing: Exponential function
Number of accumulations: 10000

By the following method, a test chloroprene-based polymer latex composition containing the latex containing the above-described chloroprene-based polymer was prepared, the test chloroprene-based polymer latex was dip-molded to obtain a dip-molded body, and furthermore, the dip-molded body was heat-dried to prepare a test dip-molded article, which was then evaluated.

<Preparation of Dip-molded Article>

To 100 parts by mass of a solid content of each chloroprene-based polymer, an aqueous dispersion was mixed, and water was further added to the mixture to adjust a total solid content concentration of a compounded material to 30% by mass, thereby preparing a test chloroprene-based polymer latex composition. The aqueous dispersion was prepared by mixing 2 parts by mass of Type 2 zinc oxide, 2 parts by mass of a butylated reaction product of p-cresol and dicyclopentadiene (product name "NOCRAC PBK", manufactured by Ouchi Shinko Chemical Industrial Co., Ltd.), 0.1 parts by mass of a sodium salt of β-naphthalenesulfonic acid formalin condensate (product name "Demol N", manufactured by Kao Corporation), and 11 parts by mass of water, using a ceramic ball mill at 20°C for 16 hours. The obtained test chloroprene-based polymer latex composition contains, with respect to 100 parts by mass of the solid content of the chloroprene-based polymer, 2 parts by mass of two kinds of zinc oxide, 2 parts by mass of the butylated reaction product of p-cresol and dicyclopentadiene (product name "NOCRAC PBK", manufactured by Ouchi Shinko Chemical Industrial Co., Ltd.), 0.1 parts by mass of the sodium salt of β-naphthalenesulfonic acid formalin condensate (product name "Demol N", manufactured by Kao Corporation), and water.

A cylindrical mold made of ceramics with an outer diameter of 50 mm (manufactured by Shinko Corporation) was immersed for 1 second in a coagulant solution prepared by mixing 62 parts by mass of water, 35 parts by mass of potassium nitrate tetrahydrate, and 3 parts by mass of calcium carbonate, and then taken out. After drying for 3 minutes, it was immersed for 2 minutes in the test chloroprene-based polymer latex composition prepared by the procedure described above. Thereafter, it was washed with running water at 45°C for 1 minute and dried at 130°C for 30 minutes to prepare a test dip-molded article film.

(Film Thickness)

Using a test piece thickness gauge (manufactured by Kobunshi Keiki Co., Ltd., product name: ASKER SDA-12), thicknesses (film thicknesses) at three locations in a central part of the dip-molded article film for evaluating tensile properties were measured, and a minimum thickness was obtained as the thickness of the test dip-molded article. Results are shown in Table 1 and Table 2.

(Measurement of Tensile Properties)

Using the dip-molded article film for evaluating tensile properties, a modulus at 500% elongation and a tensile strength at break were measured in accordance with JIS K 6251. Furthermore, the test chloroprene-based polymer latex composition of each Example and Comparative Example was stored at 23°C for 6 months, and the modulus at 500% elongation was measured in accordance with JIS K 6251. Results are shown in Table 1 and Table 2.

(Low-temperature Hardness Change)

A test dip-molded article was stored at -10°C for 168 hours, and a low-temperature hardness change was determined from hardnesses of the test dip-molded article before and after storage. Results are shown in Table 1.

# EP 4 660 210 A1

Formula (2): $\Delta H = HB - HA$

In formula (2), HA represents a Shore hardness measured at 23°C using the durometer type A after subjecting a test dip-molded article before storage at -10°C for 168 hours to a heat treatment for decrystallization at 70°C for 30 minutes, and then stacking the test dip-molded article to a thickness of 6.00 ± 0.20 mm, and HB represents a Shore hardness measured at -10°C using the durometer type A after subjecting the test dip-molded article before storage at -10°C for 168 hours to a heat treatment for decrystallization at 70°C for 30 minutes, further storing the test dip-molded article at -10°C for 168 hours, and then stacking the test dip-molded article to a thickness of 6.00 ± 0.20 mm.

(Ratio RB/RA of Total Peak Area RB of Abietic Acid, Neoabietic Acid, Palustric Acid, Levopimaric Acid, and Salts Thereof to Total Peak Area RA of Dehydroabietic Acid, Pimaric Acid, Isopimaric Acid, Dihydroabietic Acid, and Salts Thereof)

A test piece was obtained by cutting 3 g of the above-mentioned test dip-molded article into 2 mm squares. After placing this test piece in an eggplant-shaped flask equipped with a condenser, gas chromatography was performed under the following conditions using an extract obtained by extracting with an ethanol and toluene azeotropic mixture (ETA solution) specified in JIS K 6229 and subjecting it to a hydrochloric acid treatment. From measurement results of the gas chromatography, a total peak area RA of dehydroabietic acid, pimaric acid, isopimaric acid, dihydroabietic acid, and salts thereof was determined. Furthermore, a total peak area RB of abietic acid, neoabietic acid, palustric acid, levopimaric acid, and salts thereof was determined, and a ratio RB/RA ((conjugated resin acid component b)/(non-conjugated resin acid component a)) of the total peak area RB of abietic acid, neoabietic acid, palustric acid, levopimaric acid, and salts thereof to the total peak area RA of dehydroabietic acid, pimaric acid, isopimaric acid, dihydroabietic acid, and salts thereof in the test dip-molded article was calculated.

[Gas Chromatography Measurement Conditions]

Column used: FFAP 0.32 mmφ (diameter) × 25 m (film thickness 0.3 μm)
Detector: FID
Column temperature: 200°C (hold for 90 min) → 250°C
Heating rate: 10°C/min
Inlet port temperature: 270°C
Detector temperature: 270°C
Injection volume: 2 μL

[Table 1]

| Table 1 | | | Example | | | | | | | | |
|---|---|---|---|---|---|---|---|---|---|---|---|
| | | | 1 | 2 | 3 | 4 | 5 | 6 | 7 | 8 | 9 |
| analysis results of chloroprene-based polymer | 2,3-dichloro-1,3-butadiene content | % by mass | 24.1 | 18.0 | 15.6 | 26.6 | 29.3 | 23.5 | 23.8 | 13.4 | 15.9 |
| | toluene-insoluble content | % by mass | 85.1 | 83.9 | 82.1 | 76.1 | 64.2 | 84.6 | 82.2 | 84.8 | 85.0 |
| | 13C-solid-state NMR measurement results PA/(PB - PC)×100 | - | 4.7 | 4.6 | 4.7 | 4.6 | 4.6 | 4.8 | 4.7 | 6.8 | 5.2 |

(continued)

| Table 1 | | | Example | | | | | | | | |
|---|---|---|---|---|---|---|---|---|---|---|---|
| | | | 1 | 2 | 3 | 4 | 5 | 6 | 7 | 8 | 9 |
| measurement results of dip-molded article | low-temperature hardness change | - | 12 | 13 | 14 | 13 | 15 | 12 | 16 | 10 | 12 |
| | RB/RA | - | 0.28 | 0.27 | 0.27 | 0.30 | 0.34 | 0.14 | 0.64 | 0.29 | 0.34 |
| tensile properties of dip-molded article | film thickness | mm | 0.20 | 0.21 | 0.20 | 0.20 | 0.19 | 0.22 | 0.20 | 0.20 | 0.19 |
| | modulus at 500% elongation | MPa | 1.72 | 1.69 | 1.57 | 1.50 | 1.20 | 1.30 | 2.00 | 1.54 | 1.72 |
| | tensile strength at break | MPa | 24.8 | 25.7 | 24.1 | 23.1 | 22.2 | 22.6 | 25.8 | 20.0 | 20.1 |
| | modulus at 500% elongation after storage at 23°C for 6 months | MPa | 1.83 | 1.75 | 1.62 | 1.54 | 1.26 | 1.35 | 2.30 | 1.60 | 1.81 |

[Table 2]

| Table 2 | | | Comparative Example | | | | | | | |
|---|---|---|---|---|---|---|---|---|---|---|
| | | | 1 | 2 | 3 | 4 | 5 | 6 | 7 | 8 |
| analysis results of chloroprene-based polymer | 2,3-dichloro-1,3-butadiene content | % by mass | 11.3 | 8.3 | 24.0 | 24.3 | 33.5 | 19.2 | 18.9 | 18.4 |
| | toluene-insoluble content | % by mass | 84.5 | 83.1 | 70.0 | 84.9 | 56.0 | 87.0 | 89.0 | 86.0 |
| | 13C-solid-state NMR measurement results PA/(PB - PC)×100 | - | 4.7 | 4.6 | 4.7 | 4.7 | 4.8 | 4.2 | 4.9 | 4.6 |
| measurement results of dip-molded article | low-temperature hardness change | - | 32 | 36 | 18 | 16 | 15 | 30 | 20 | 31 |
| | RB/RA | - | 0.27 | 0.28 | 0.74 | 0.00 | 0.30 | 0.31 | 0.27 | 0.33 |
| tensile properties of dip-molded article | film thickness | mm | 0.19 | 0.20 | 0.22 | 0.21 | 0.20 | 0.20 | 0.19 | 0.20 |
| | modulus at 500% elongation | MPa | 1.65 | 2.11 | 2.10 | 1.51 | 1.62 | 1.82 | 2.10 | 1.51 |
| | tensile strength at break | MPa | 23.7 | 26.2 | 25.6 | 16.7 | 18.9 | 24.9 | 26.3 | 17.9 |
| | modulus at 500% elongation after storage at 23°C for 6 months | MPa | 2.98 | 3.54 | 2.21 | 1.60 | 1.70 | 3.21 | 2.43 | 2.97 |

**Claims**

1. A chloroprene-based polymer comprising a chloroprene monomer unit and a 2,3-dichloro-1,3-butadiene monomer unit, wherein:

   the chloroprene-based polymer contains 12 to 30% by mass of the 2,3-dichloro-1,3-butadiene monomer unit with respect to 100% by mass of a total of the chloroprene monomer unit and the 2,3-dichloro-1,3-butadiene monomer unit,
   the chloroprene-based polymer has a toluene-insoluble content of 60 to 87% by mass,
   a low-temperature hardness change $\Delta H1$ of a test dip-molded article is 29 or less, wherein the test dip-molded article is obtained by molding a test chloroprene-based polymer latex composition comprising the chloroprene-based polymer by a dip coagulation method and heat-drying a molded body resulting therefrom at 130°C for 30 minutes; the low-temperature hardness change $\Delta H1$ is represented by HB1-HA1; HA1 represents a Shore hardness measured at 23°C using a durometer type A after heat-treating the test dip-molded article at 70°C for 30 minutes and then stacking the test dip-molded article to a thickness of $6.00 \pm 0.20$ mm; and HB1 represents a Shore hardness measured at -10°C using the durometer type A after heat-treating the test dip-molded article at 70°C for 30 minutes, further storing the test dip-molded article at -10°C for 168 hours, and then stacking the test dip-molded article to a thickness of $6.00 \pm 0.20$ mm, and
   a ratio RB/RA is 0.10 or more and 0.70 or less, wherein the ratio RB/RA is a ratio of a total peak area RB of abietic acid, neoabietic acid, palustric acid, levopimaric acid, and salts thereof to a total peak area RA of dehydroabietic acid, pimaric acid, isopimaric acid, dihydroabietic acid, and salts thereof, obtained from a gas chromatography analysis of an extract extracted from the test dip-molded article with an ethanol and toluene azeotropic mixture specified in JIS K 6229.

2. The chloroprene-based polymer of Claim 1, wherein in a 13C-solid-state NMR spectrum of the chloroprene-based polymer, when a peak area from 126.2 to 127.6 ppm is PA, a peak area from 122.0 to 126.2 ppm is PB, and a peak area from 129.9 to 130.3 ppm is PC, formula (1) is satisfied:

$$\text{Formula (1): } 4.4 \leq \text{PA}/(\text{PB} - \text{PC}) \times 100 \leq 5.0.$$

3. A chloroprene-based polymer latex comprising the chloroprene-based polymer of Claim 1 or 2 and water.

4. A dip-molded article of a chloroprene-based polymer latex composition, the composition comprising the chloroprene-based polymer latex of Claim 3.

5. The dip-molded article of Claim 4, wherein the dip-molded article is an industrial glove, a household glove, a medical glove, a balloon, a catheter, or a boot.

6. The dip-molded article of Claim 4, wherein a low-temperature hardness change $\Delta H2$ is 29 or less, wherein:

   the low-temperature hardness change $\Delta H2$ is represented by HB2-HA2;
   HA2 represents a Shore hardness measured at 23°C using the durometer type A after heat-treating the dip-molded article at 70°C for 30 minutes and then stacking the dip-molded article to a thickness of $6.00 \pm 0.20$ mm; and
   HB2 represents a Shore hardness measured at -10°C using the durometer type A after heat-treating the dip-molded article at 70°C for 30 minutes, further storing the dip-molded article at -10°C for 168 hours, and then stacking the dip-molded article to a thickness of $6.00 \pm 0.20$ mm.

7. A dip-molded article of a chloroprene-based polymer latex composition, the composition comprising a chloroprene-based polymer, wherein:

   the dip-molded article has a low-temperature hardness change $\Delta H2$ of 29 or less, wherein the low-temperature hardness change $\Delta H2$ is represented by HB2-HA2; HA2 represents a Shore hardness measured at 23°C using the durometer type A after heat-treating the dip-molded article at 70°C for 30 minutes and then stacking the dip-molded article to a thickness of $6.00 \pm 0.20$ mm, and HB2 represents a Shore hardness measured at -10°C using the durometer type A after heat-treating the dip-molded article at 70°C for 30 minutes, further storing the dip-molded article at -10°C for 168 hours, and then stacking the dip-molded article to a thickness of $6.00 \pm 0.20$ mm;

and

the dip-molded article has a tensile strength at break measured according to JIS K 6251 of 20.0 MPa or more, and a modulus at 500% elongation of 2.00 MPa or less.

## INTERNATIONAL SEARCH REPORT

| | |
|---|---|
| International application No. | |
| | **PCT/JP2024/002092** |

| | |
|---|---|
| **A.** | **CLASSIFICATION OF SUBJECT MATTER** |

*C08F 236/18*(2006.01)i; *C08J 5/02*(2006.01)i
FI:    C08F236/18; C08J5/02 CEQ

According to International Patent Classification (IPC) or to both national classification and IPC

| | |
|---|---|
| **B.** | **FIELDS SEARCHED** |

Minimum documentation searched (classification system followed by classification symbols)

C08F236/18; C08J5/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2022/202254 A1 (DENKA COMPANY LIMITED) 29 September 2022 (2022-09-29) | 1-7 |
| A | WO 2019/009038 A1 (DENKA COMPANY LIMITED) 10 January 2019 (2019-01-10) | 1-7 |
| A | WO 2022/130702 A1 (DENKA COMPANY LIMITED) 23 June 2022 (2022-06-23) | 1-7 |
| P, A | WO 2023/190143 A1 (DENKA COMPANY LIMITED) 05 October 2023 (2023-10-05) | 1-7 |
| P, A | WO 2023/190144 A1 (DENKA COMPANY LIMITED) 05 October 2023 (2023-10-05) | 1-7 |
| P, A | WO 2023/058526 A1 (DENKA COMPANY LIMITED) 13 April 2023 (2023-04-13) | 1-7 |

☐ Further documents are listed in the continuation of Box C.    ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/002092**

| Patent document cited in search report | | | Publication date (day/month/year) | Patent family member(s) | | | Publication date (day/month/year) |
|---|---|---|---|---|---|---|---|
| WO | 2022/202254 | A1 | 29 September 2022 | EP | 4241955 | A1 | |
| | | | | CN | 116264828 | A | |
| WO | 2019/009038 | A1 | 10 January 2019 | US | 2021/0292525 | A1 | |
| | | | | EP | 3650478 | A1 | |
| | | | | CN | 110945042 | A | |
| WO | 2022/130702 | A1 | 23 June 2022 | EP | 4227325 | A1 | |
| | | | | CN | 116234833 | A | |
| | | | | KR | 10-2023-0095065 | A | |
| | | | | TW | 202231666 | A | |
| WO | 2023/190143 | A1 | 05 October 2023 | (Family: none) | | | |
| WO | 2023/190144 | A1 | 05 October 2023 | (Family: none) | | | |
| WO | 2023/058526 | A1 | 13 April 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014114342 A
- WO 2019009038 A
- JP 2019143002 A
- WO 2021132460 A
- JP 2017508840 T
- JP 2020189963 A